# EUROPEAN PATENT SPECIFICATION

(11) **EP 2 115 319 B1**
(45) Date of publication and mention of the grant of the patent: **14.10.2015**
(21) Application number: 07857914.1
(22) Date of filing: 20.12.2007
(51) Int. Cl.: F16G 5/16

(54) **DRIVE BELT FOR A CONTINUOUSLY VARIABLE TRANSMISSION WITH TRANSVERSE ELEMENTS PROVIDED WITH CONTACT ZONES**
ANTRIEBSRIEMEN FÜR STUFENLOSES GETRIEBE MIT QUERELEMENTEN MIT KONTAKTBEREICHEN
COURROIE DE TRANSMISSION POUR BOÎTE DE VITESSES À VARIATION CONTINUE COMPORTANT DES ÉLÉMENTS TRANSVERSAUX POURVUS DE ZONES DE CONTACT

(30) Priority: 27.12.2006 NL 1033140
(43) Date of publication of application: 11.11.2009
(73) Proprietor: Robert Bosch GmbH, 70442 Stuttgart (DE)
(72) Inventor: VAN DER MEER, Cornelis Johannes Maria, 5032 XG Tilburg (NL); FAES, Paulus Adrianus Josephus Maria, 5045 ZH Tilburg (NL); FEIJTEL, Jasper, 3319 EV Dordrecht (NL); PASTEUNING, Jan, 5223 ML 's Hertogenbosch (NL)
(74) Representative: Plevier, Gabriel Anton Johan Maria
(86) International application number: PCT/EP2007/064293
(87) International publication number: WO 2008/077870

(56) References cited:
- EP-A1- 0 278 545
- EP-A1- 0 626 526
- EP-A1- 1 061 285
- WO-A-03/072978
- WO-A-2004/036083
- JP-A- 2002 213 539

## Description

The present invention relates to a drive belt for a continuously variable transmission having two pulleys, each composed of two pulley sheaves or drive wheels with an at least partially conical contact face for wedging in the drive belt in pairs. The known drive belt comprises one or more assemblies of endless, i.e. self-contained, ribbon-shaped rings on which a large number of relatively thin transverse elements are fitted more or less continuously and so as to be movable around the circumference of said rings. For this purpose, the transverse elements are provided with a recess for at least partially accommodating a ring assembly. Such a drive belt is known, for example from European patent publication No. EP-A-0 626 526,'and is also sometimes referred to as the Van Doorne push belt.

The known transverse element is provided with at least one recess for accommodating the ring assembly and is composed of a base part lying radially inside the abovementioned recess, a connecting piece lying between the recesses, and a head part lying radially outside the recesses. On at least one main side, or its front side, the base part is provided with a so-called tilting zone extending over it in the axial or transverse direction, and forming a transition between a radially outermost or top part of the transverse element with an at least virtually constant nominal thickness and a radially innermost or bottom part of said transverse element with a thickness which decreases radially inwards, i.e. which at least effectively tapers in that direction. Partly because of this, the adjacent transverse elements in the drive belt are tiltable relative to each other and the drive belt as a whole is flexible in the circumferential direction. Moreover, on both lateral edges of the base part the transverse element is provided with a pulley sheave contact face for producing the frictional contact with the pulley.

During operation of the drive belt in the transmission the transverse elements push each other along from the driving to a driven pulley of the transmission, the front side of a transverse element coming up behind being in contact with the other main side, or the rear side, of a preceding transverse element, and exerting pushing force in the process. In order to produce such pushing contact in a precisely defined way, it is known to provide at least one of the two main sides, generally the front side, with contact zones which lie higher up than the other parts of the main side concerned (those surrounding the contact zones). At the position of these contact zones the thickness of the transverse element is therefore greater than it is outside them. For the rest, this is usually only a minimal difference in thickness, of the order of magnitude of between a minimum of five to ten and a maximum of around a hundred micrometres.

It is generally known, disclosed in particular in EP-A-1 061 285, that the use of such precisely defined contact zones is advantageous both for the production of the transverse elements and for their use in the drive belt. For this purpose, the known transverse element is provided with one or more contact zones in the base part, or bottom contact zones, and is provided with one or more contact zones in the head part, or top contact zones, the thickness of the transverse element at the position of said top contact zones being greater than that thickness at the position of the bottom contact zones. This is to permit the formation of a slightly convexly curved arch of continuous transverse elements between the driving pulley and the driven pulley, so that vibrations in the radial direction of this part of the drive belt are suppressed.

A drive belt according to the preamble of claim 1 is known from WO 2004/036083 (see fig. 9).

In practice, it has been found that the known type of transverse element has a disadvantage, which manifests itself in particular when the drive belt is under a relatively heavy load, such as in particular a high transmission torque. More particularly, in the abovementioned circumstances vibrations which the user finds undesirable can occur in the drive belt, and such vibrations may even lead to premature failure of the drive belt.

It is an object of the present invention to make a further improvement in the load-bearing capacity of the known drive belt. This object can be achieved according to the invention by further optimizing the pushing contact between the individual transverse elements of the drive belt.

According to the present invention, the object described above is achieved with the drive belt according to Claim 1. The drive belt according to the invention is provided with transverse elements whose total contact zone in the head part, or the total top contact zone, is at least equal to, and is preferably greater than, the total contact zone in the base part, or the total bottom contact zone.

The present invention is based on the hypothesis that the abovementioned vibrations can occur when the top contact zones are compressed elastically so far under the influence of the pushing force exerted between the transverse elements that the abovementioned arch cannot be formed. However, by using the measure according to the invention, it is ensured in a relatively simple and reliable manner that the difference in thickness of the transverse element between the top and the bottom contact zones remains present even when said zones are compressed elastically during operation, and that the appropriate arch of the drive belt which suppresses vibrations is formed.

According to the present invention the total bottom contact zone is composed of two bottom contact zones situated on either side of the base part and having between them a recessed central part of said zone lying in line with the likewise recessed connecting piece. Such a shape of the bottom contact zone, in this case contact zones, provides a minimal deformation of the base part as a result of the forces which in the frictional contact with the pulleys act upon the pulley sheave contact faces. This is advantageous for the load-bearing capacity of the drive belt, a principle which has already been disclosed in EP-A-1 458 992. Although in this respect in principle one contact zone extending over virtually the full dimension in the transverse direction or width of the base part would also suffice, it has been found quite time-consuming in practice with the commonly used production techniques to give such a large contact zone a sufficiently accurate shape, at any rate in mass production and at acceptable production costs.

According to the present invention, the total top contact zone in this case preferably extends so far towards the two lateral edges of the transverse element that in that direction there is an overlap between the total top contact zone and the two bottom contact zones. According to the invention, it is not very relevant here in the first instance whether the total top contact zone is formed as a whole, or as one continuous zone, or whether it is composed of, for example, two partial zones or contact islands. In the latter case it is, of course, actually preferable for the abovementioned partial zones to be accommodated in the head part in a substantially mirror-symmetrical manner on either side of a centrally situated axis of symmetry of said head part. It is particularly advantageous according to the invention here if the total top contact zone extends in the transverse direction above the two bottom contact zones over, or viewed in that direction overlaps by at least 25%, preferably more than 50%, the respective dimensions thereof in the transverse direction.

The invention will now be explained in greater detail by way of example on the basis of the description below with reference to the drawing, in which:
Figure 1 is a perspective view of a partially cut-away transmission in which the present drive belt is used;
Figure 2 is a section in the circumferential direction of the known drive belt having in it a diagrammatic front view of a transverse element in which the contours of a main face thereof are shown;
Figure 3 shows a diagrammatic side view of the transverse element of Figure 2;
Figure 4 shows the known transverse element of Figure 2 in greater detail, including a cross section of a top part of said element;
Figure 5 is a section in the circumferential direction of a first exemplary embodiment of the drive belt according to the invention; and
Figure 6 is a section in the circumferential direction of a second exemplary embodiment of the drive belt according to the invention.

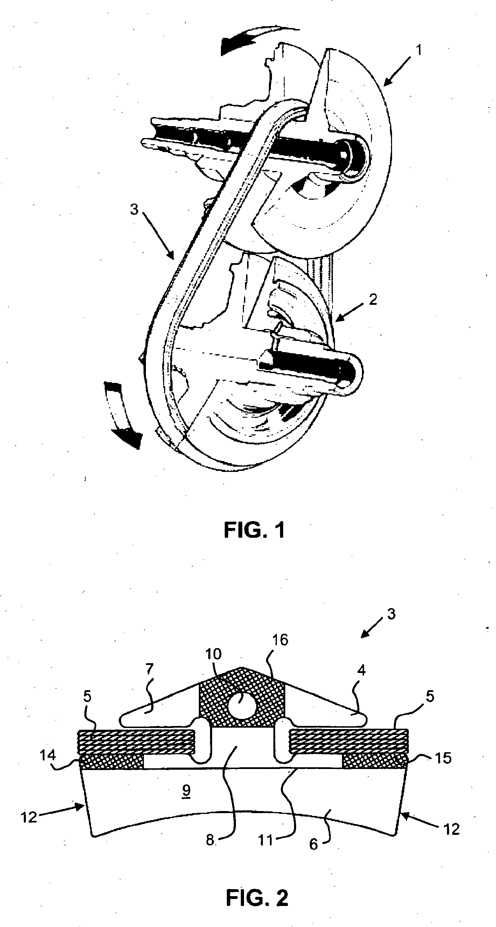

Figure 1 shows diagrammatically the central parts of a continuously variable transmission for the drive of, for example, private motor vehicles. This transmission is generally known per se and comprises at least a first and a second drive wheel, or pulley 1, 2 and a drive belt 3 accommodated between the sheaves of the pulleys 1 and 2. The sheaves of a pulley 1, 2 are conically shaped, at least one sheave being fitted so as to be axially movable over a shaft of the respective pulley 1, 2. For this purpose, electronically controllable and hydraulically acting movement means are generally accommodated in the transmission, which means are not shown in the figure. The activation of these movement means leads to an axial movement of the respective sheave, and consequently to a radial adjustment of the position of the drive belt 3 between the sheaves of the pulleys 1, 2. The driving force of a pulley 1, 2 is transmitted by means of friction in the conical contact faces between the sheaves and the drive belt.

Figure 2 shows a section in the circumferential direction of the drive belt 3 of Figure 1, with a front view of a transverse element 4 from said belt shaped in a known manner. The drive belt 3 furthermore comprises two self-contained bearers 5, each consisting of a set of nested thin metal rings and bearing the transverse elements 4, and in the process absorbing at least a radial component of the forces occurring between the drive belt 3 and a pulley 1, 2. The transverse elements 4 are accommodated in the drive belt 3 so as to be freely movable in its circumferential direction relative to the bearers 5.

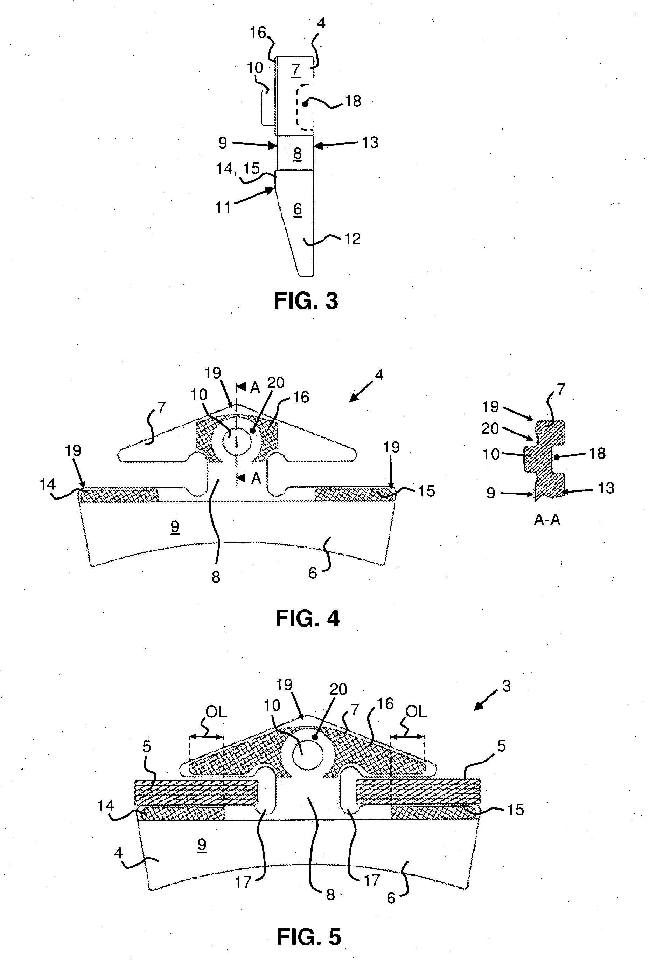

The known transverse element comprises a substantially trapezoidal base part 6, which is situated below the bearers 5, a more or less triangular head part 7, which is situated above the bearers 5, and a connecting piece 8, which is present between the bearers 5 and connects the base part 6 and the head part 7 to each other. On the illustrated front face 9 of the transverse element 4 in the head part 7 of said transverse element a projecting protuberance 10 is also provided, along with a so-called tilting line 11 below which the transverse element 4 decreases in thickness, and over which adjacent transverse elements 4 in the drive belt 3 can tilt relative to each other. The substantially axially directed lateral side faces 12 of the base part 6, which form part of the circumferential face of the transverse element which extends between the front face 9 and a rear face 13 (see Fig. 3) of said transverse element are intended here for the frictional contact with the sheaves of the pulleys 1, 2. Figure 3 shows the known transverse element 4 again in side view, in which the contour of a depression 18 provided in the rear face 13 of the transverse element 4 is also shown, in which depression the protuberance 10 of an adjacent transverse element 4 in the drive belt 3 is accommodated.

Furthermore, the known transverse element 4 is designed with three so-called contact zones 14 - 16 in its front face 9, which contact zones in the front view are shown diagrammatically by the hatchings, and which contact zones are situated relatively raised in relation to the other parts of the front face 9. In other words, at the position of said contact zones the thickness of the transverse element 4, or the dimension between the front face 9 and the rear face 13 of said transverse element, is greater than it is outside those zones. Two of the three contact zones 14, 15 are present in the base part 6 near a respective outermost lateral edge of said base part. These two so-called bottom contact zones 14, 15 are separated from each other here in the centre of the transverse element 4 in said lateral, or transverse direction, at least over the width of the connecting piece 8. The third contact zone 16 is present in the head part 7, viewed in the lateral or transverse direction in the centre of said head part. This latter so-called top contact zone 16 extends in the transverse direction here across approximately the width of the connecting piece 8 in the head part 7. At the position of the part of the base part 6 situated between the two contact zones 14, 15 the part of the connecting piece 8 situated below the top contact zone 16 and the parts of the head part 7 situated outside the top contact zone 16, the transverse element 4 is therefore thinner than it is at the position of the abovementioned contact zones 14 - 16. It is pointed out here that the transverse element 4 in Figures 2 and 3 is not shown to scale and, for example, the relatively raised position of the contact zones 14 - 16 is greatly exaggerated. In practice, it is typically only some tens of micrometres in relation to a nominal transverse element thickness of around 1.5 mm. It is also pointed out that a transition between a contact zone 14 - 16 lying higher up and a recessed part of the front face 9 of the transverse element 4 lying next to it is generally not sharply defined, i.e. not so much stepwise, but is formed more gradually as a more or less naturally sloping transition between them. According to the definition applied now, those parts of the front face 9 that lie less than 5 to 10 micrometres below a highest point of the contact zone 14-16 concerned, are considered to be part of a respective contact zone 14-16. Such accuracy of dimension is, incidentally, readily achievable with various generally available measuring instruments, such as the perthometer and white light interferometer.

In the drive belt 3 the pushing contact between two adjacent transverse elements 4 therefore occurs substantially by way of the contact zones 14 - 16 on the front face 9 of a transverse element 4 coming up behind and corresponding locations on the substantially flat rear face 13 of a preceding transverse element 4. Since the thickness of the known transverse element 4 at the position of the abovementioned top contact zone 16 is again just slightly greater than that thickness at the position of the abovementioned bottom contact zones 14, 15, a slightly convexly curved arch of continuous transverse elements 4 is formed here between the driving pulley and the driven pulley, so that vibrations in the radial direction of this part of the drive belt 3 are suppressed.

Although this known transverse element 4 functions well per se and provides considerable production and functional improvements compared with earlier transverse elements 4 with a substantially flat front face 9 above the tilting line 11, it has been found in practice that the design is not very suitable for specific operating conditions of the drive belt 3. More particularly, when the drive belt 3 is subjected to a relatively heavy load, which was in fact previously not possible or not the case, undesirable vibrations occur in the drive belt. Such vibrations are found by the user to be undesirable and may even lead to premature failure of the drive belt 3.

According to the present invention, the abovementioned problem arises if the total top contact zone 16 is smaller than the total bottom contact zone 14, 15, which in practice - contrary to what the figures from EP-A-1 061 285 suggest - is also the case with the known transverse element 4.

First, the known contact zones 14 - 16 in fact in reality do not extend fully to the edge of the transverse element 4, i.e. the front face 9, as shown in Figure 4 of the present application. This results from the generally known phenomenon of material shrinkage, which occurs during the punching from the sheet-type base material of the transverse elements 4 along the circumferential edge of said transverse elements. The influence of this material shrinkage on the various contact zones 14 - 16 is greatest at the position of the centre of the top edge 19 of the transverse element 4, or at the position of the top contact zone 16.

Secondly, according to the invention, as it has been found necessary or at least very advantageous in practice, the transverse elements 4 around their protuberance 10 are likewise provided with a zone 20 lying lower down than the contact zones 14 - 16. This means that there too no contact is possible between the adjacent transverse elements 4 in the drive belt 3, and the effective frontal surface of the top contact zone 16 is limited further. The last-mentioned zone 20 lying lower down is produced by raised pressure being applied locally to the transverse element 4 during its formation process, in order to produce sufficient material flow to permit the formation of the protuberance. Furthermore, the function of the last-mentioned zone 20 lying lower down is to avoid contact between a concavely rounded foot of the protuberance 10 and a convexly rounded edge of the depression 18.

Both of the abovementioned effects ensure that the top contact zone 16 of the known transverse element 4 in Figures 2 and 3 in reality has a significantly smaller surface, as shown in Figure 4. In practice, the total surface of the known top contact zone 16, or the top contact surface, is even smaller than that of the two known bottom contact zones 14, 15, or the bottom contact surface. According to the present invention, this will mean that the difference in thickness between the top and the bottom contact zones 14 - 16 can disappear under the influence of the pushing forces exerted between the transverse elements 4 in the drive belt 3, in which case the abovementioned undesirable vibrations will occur in the drive belt.

Conversely, these vibrations can be avoided according to the invention if also during operation of the drive belt 3 the surface area of the top contact zone 16 is at least equal to, and is preferably greater than, the surface area of the bottom contact zones 14, 15, so that the difference in thickness of the transverse element 4 between the top and the bottom contact zones 16 and 14 and 15 respectively remains present. Such a design of transverse element according to the present invention is shown in Figure 5.

The transverse element 4 of Figure 5 is provided here with two bottom contact zones 14, 15 extending in the transverse direction from a lateral edge of the base part 6 to a notch 17 in said base part, which notches 17 form a transition between the base part 6 and the connecting piece 8, and said transverse element is provided with a top contact zone 16 which is situated in the centre of the head part 7 and is of a width that is considerably greater than the width of the connecting piece 8 including the abovementioned notches 17. In this way there is in the transverse direction an overlap OL, shown in Figure 4, between the individual bottom contact zones 14, 15 and the top contact zone 16. This measure in the design of the transverse element 4 again according to the invention has the advantage that it suppresses the abovementioned vibration occurring in the drive belt 3.

This second measure according to the invention has to do with the phenomenon that the transverse elements 4 in the drive belt 3 can rotate relative to each other, or at least have the tendency to rotate relative to each other, about an imaginary axis between one of the bottom contact zones 14 or 15 and the top contact zone 16. It is a fact here that the more the abovementioned imaginary axis is oriented in the transverse direction, i.e. the further the bottom contact zones 14, 15 and top contact zone 16 are situated apart in that direction, the more easily the abovementioned rotation occurs under the influence of the forces prevailing in the drive belt 3. On the basis of this specific additional insight, the present invention proposes that the lateral dimensions of the top contact zone 16 and the bottom contact zones 14, 15 be adjusted in relation to each other in such a way that an overlap OL exists between them in the transverse direction. This is because by this measure it is ensured that the abovementioned imaginary axis of rotation between one of the bottom contact zones 14 or 15 and the top contact zone 16 is oriented substantially in the vertical or radial direction, i.e. perpendicular to the abovementioned transverse direction. As a result, the tendency of the transverse element 4 to rotate about said axis is advantageously minimized.

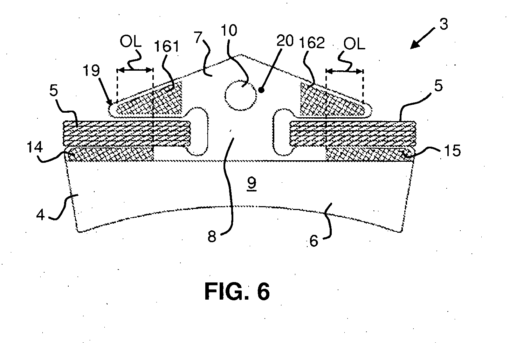

According to the invention, the top contact zone 16 otherwise need not necessarily consist of one continuous zone. As illustrated in Figure 6 in a cross section of the drive belt 3, two separate top partial contact zones 161, 162 can also be provided, which contact zones, viewed in the transverse direction, are separated from each other in the centre of the transverse element 4. This second variant of an embodiment of the invention has the advantage that a relatively large lateral overlap OL between the top contact zones 161 and 162 and the individual bottom contact zones 14, 15 can be achieved, and the total dimension of the top contact zone 16, as the total of the two partial zones 161 and 162, can remain limited.

## Claims

1. Drive belt (3), in particular for use in a continuously variable transmission such as that for private motor vehicles with two drive wheels (1, 2), between which the drive belt (3) is accommodated, which drive belt (3) comprises two self-contained bearers (5), on which a large number of transverse elements (4) are accommodated, which transverse elements (4) are freely movable at least in the circumferential direction of the bearers (5), the bearers (5) being situated in two recesses of the individual transverse elements (4) below which a base part (6) and above which a head part (7) of the transverse element (4) is situated, which parts (6, 7) are interconnected by means of a connecting piece (8) of the transverse element (4) which is situated in the transverse direction between the bearers (5), the transverse elements (4) furthermore comprising two main sides (9, 13) which on mutual pushing contact between adjacent transverse elements (4) are directed into the drive belt (3), at least one main side (9) of which is provided with a projecting protuberance (10) in the head part (7) of said transverse element (4) and with three or more defined contact zones (14, 15, 16; 161, 162), which lie higher up than other parts of the main side (9) concerned are lying lower down and that cover at least the connecting piece (8) and a zone (20) around the protuberance (10), whereof two bottom contact zones (14, 15) are provided in the base part (6) on respective lateral edges thereof, which two bottom contact zones (14, 15) are separated from each other in the transverse direction by a part of the main side (9) concerned lying lower down and whereof one or more top contact zones (16; 161, 162) are provided in the head part (7), **characterized in that** the surface area of the top contact zone or contact zones (16; 161, 162) is at least equal to the surface area of the bottom contact zones (14, 15).

2. Drive belt (3) according to Claim 1, **characterized in that** two individual top contact zones (161, 162) separated from each other in the transverse direction are provided in the head part (7) of the transverse element (4), between which contact zones a part of the main side (9) concerned lying lower down is situated.

3. Drive belt (3) according to Claim 2, **characterized in that** the abovementioned two top contact zones (161, 162) are accommodated in said drive belt in a substantially mirror-symmetrical manner on either side of a centrally situated axis of symmetry of the head part (7).

4. Drive belt (3) according to one or more of the preceding claims, **characterized in that** the top contact zone, or the top contact zones (16; 161, 162), at least partially overlap(s) the abovementioned two bottom contact zones (14, 15), viewed in the transverse direction.

5. Drive belt (3) according to one or more of the preceding claims, **characterized in that** the top contact zone (16), or the top contact zones (16; 161, 162), extend(s) in the transverse direction above the abovementioned two bottom contact zones (14, 15) over in both cases at least 25%, and preferably more than 50%, of a respective dimension in the transverse direction thereof.

6. Drive belt (3) according to one or more of the preceding claims, **characterized in that** a difference in thickness of the transverse element (16), on the one hand at the position of the abovementioned contact zones (14, 15, 16; 161, 162) and, on the other hand at the position of the abovementioned other parts of the main side (9) concerned, has a value in the range from a minimum of five to ten micrometres to a maximum of around a hundred micrometres.

## Patentansprüche

1. Antriebsriemen (3), insbesondere zur Verwendung in einem stufenlosen Getriebe wie dem für Personenkraftfahrzeuge mit zwei Antriebsrädern (1, 2), zwischen denen der Antriebsriemen (3) untergebracht ist,
wobei der Antriebsriemen (3) zwei in sich geschlossene Träger (5) umfasst, an denen eine große Anzahl von Querelementen (4) untergebracht sind,
wobei die Querelemente (4) mindestens in der Umfangsrichtung der Träger (5) frei beweglich sind, wobei die Träger (5) in zwei Vertiefungen der einzelnen Querelemente (4) angeordnet sind, unter denen ein Unterteil (6) und über denen ein Kopfteil (7) des Querelements (4) angeordnet sind;
wobei die Teile (6, 7) mittels eines Verbindungsstücks (8) des Querelements (4), das in Querrichtung zwischen den Trägern (5) angeordnet ist, miteinander verbunden sind,
wobei die Querelemente (4) ferner zwei Hauptseiten (9, 13) umfassen, die aufgrund des gegenseitigen Schubkontakts zwischen benachbarten Querelementen (4) auf den Antriebsriemen (3) geleitet werden, wobei mindestens eine Hauptseite (9) davon mit einem vorstehenden Vorsprung (10) im Kopfteil (7) des Querelements (4) bereitgestellt ist und drei oder mehrere definierte Kontaktbereiche (14, 15, 16; 161, 162) aufweist, die höher als andere Teile der betreffenden Hauptseite (9) liegen, die weiter unten liegen und die mindestens das Verbindungsstück (8) und einen Bereich (20) um den Vorsprung (10) bedecken,
wovon zwei untere Kontaktbereiche (14, 15) im Unterteil (6) an den zugehörigen Seitenrändern davon bereitgestellt sind,
wobei die zwei unteren Kontaktbereiche (14, 15) voneinander in Querrichtung von einem Teil der betreffenden Hauptseite (9) getrennt sind, die weiter unten liegt und wobei eine oder mehrere obere Kontaktbereiche (16; 161, 162) in dem Kopfteil (7) bereitgestellt werden,
**dadurch gekennzeichnet, dass** der Oberflächenbereich des oberen Kontaktbereichs bzw. Kontaktbereiche (16; 161, 162) mindestens dem Oberflächenbereich der unteren Kontaktbereiche (14, 15) entspricht.

2. Antriebsriemen (3) nach Anspruch 1,
**dadurch gekennzeichnet, dass** zwei einzelne obere Kontaktbereiche (161, 162), die voneinander in Querrichtung getrennt sind, im Kopfteil (7) des Querelements (4) bereitgestellt sind, wobei zwischen den Kontaktbereichen ein Teil der betreffenden Hauptseite (9), die weiter unten liegt, angeordnet ist.

3. Antriebsriemen (3) nach Anspruch 2,
**dadurch gekennzeichnet, dass** die zwei oberen Kontaktbereiche (161, 162) in dem Antriebsriemen in einer im Wesentlichen spiegelsymmetrischen Weise zu beiden Seiten einer mittig angeordneten Symmetrieachse des Kopfteils (7) untergebracht sind.

4. Antriebsriemen (3) nach einem der vorhergehenden Ansprüche,
**dadurch gekennzeichnet, dass** der obere Kontaktbereich oder die oberen Kontaktbereiche (16; 161, 162) mindestens teilweise die zwei unteren Kontaktbereiche (14, 15) aus Querrichtung betrachtet überschneidet bzw. überschneiden.

5. Antriebsriemen (3) nach einem der vorhergehenden Ansprüche,
**dadurch gekennzeichnet, dass** sich der obere Kontaktbereich (16) oder die oberen Kontaktbereiche (16; 161, 162) in beiden Fällen mindestens über 25 % in die Querrichtung über die zwei Kontaktbereiche (14, 15) erstreckt bzw. erstrecken, und vorzugsweise über mehr als 50 % der zugehörigen Abmessung in Querrichtung davon.

6. Antriebsriemen (3) nach einem der vorhergehenden Ansprüche,
**dadurch gekennzeichnet, dass** ein Unterschied in der Dicke des Querelements (16) einerseits an der Position der Kontaktbereiche (14, 15, 16; 161, 162) und andererseits an der Position der anderen Teile der betreffenden Hauptseite (9) einen Wert in dem Bereich von mindestens fünf bis zehn Mikrometer bis höchstens etwa hundert Mikrometer besitzt.

## Revendications

1. Courroie de transmission (3) en particulier à utiliser dans une transmission à variation continue telle que celle pour des véhicules à moteur particuliers équipés de deux roues motrices (1, 2), entre lesquelles la courroie de transmission (3) est installée, ladite courroie de transmission (3) comprenant deux supports autonomes (5) sur lesquels un grand nombre d'éléments transversaux (4) sont reçus, lesdits éléments transversaux (4) pouvant se déplacer librement au moins dans la direction circonférentielle des supports (5), les supports (5) étant situés dans deux renfoncements des éléments transversaux individuels (4) en dessous desquels une partie de base (6) et au-dessus desquels une partie de tête (7) de l'élément transversal (4) sont situées, lesdites parties (6, 7) étant interconnectées au moyen d'une pièce de connexion (8) de l'élément transversal (4) qui est située dans la direction transversale entre les supports (5), les éléments transversaux (4) comprenant en outre deux côtés principaux (9, 13) qui en cas de contact de poussée mutuel entre des éléments transversaux voisins (4) sont dirigés dans la courroie de transmission (3), dont au moins un premier côté principal (9) est pourvu d'une protubérance saillante (10) dans la partie de tête (7) dudit élément transversal (4) et de trois ou plus de trois zones de contact définies (14, 15, 16; 161, 162), qui sont situées plus haut que les autres parties du côté principal (9) concerné qui sont situées plus bas et qui couvrent au moins la pièce de connexion (8) et une zone (20) autour de la protubérance (10), moyennant quoi deux zones de contact inférieures (14, 15) sont prévues dans la partie de base (6) sur des bords latéraux respectifs de celle-ci, lesdites deux zones de contact inférieures (14, 15) étant séparées l'une de l'autre dans la direction transversale par une partie du côté principal (9) concerné qui est située plus bas, et moyennant quoi une ou plusieurs zone(s) de contact supérieure(s) (16; 161; 162) est (sont) prévue(s) dans la partie de tête (7), **caractérisée en ce que** l'aire de surface de la zone de contact ou des zones de contact supérieure (s) (16; 161, 162) est au moins égale à l'aire de surface des zones de contact inférieures (14, 15).

2. Courroie de transmission (3) selon la revendication 1, **caractérisée en ce que** deux zones de contact supérieures individuelles (161; 162) séparées l'une de l'autre dans la direction transversale sont prévues dans la partie de tête (7) de l'élément transversal (4), zones de contact entre lesquelles une partie du côté principal (9) concerné s'étendant plus bas est située.

3. Courroie de transmission (3) selon la revendication 2, **caractérisée en ce que** les deux zones de contact supérieures mentionnées ci-dessus (161, 162) sont reçues dans ladite courroie de transmission d'une manière sensiblement parfaitement symétrique de part et d'autre d'un axe de symétrie central de la partie de tête (7).

4. Courroie de transmission (3) selon une ou plusieurs des revendications précédentes, **caractérisée en ce que** la zone de contact supérieure, ou les zones de contact supérieures (16; 161, 162), recouvre(nt) au moins partiellement les deux zones de contact inférieures mentionnées ci-dessus (14, 15), quand on regarde dans la direction transversale.

5. Courroie de transmission (3) selon une ou plusieurs des revendications précédentes, **caractérisée en ce que** la zone de contact supérieure (16), ou les zones de contact supérieures (16; 161, 162) s'étend(ent) dans la direction transversale au-dessus des deux zones de contact inférieures mentionnées ci-dessus (14, 15) sur dans les deux cas au moins 25 % et de préférence sur plus de 50 % d'une dimension respective dans la direction transversale de celles-ci.

6. Courroie de transmission (3) selon une ou plusieurs des revendications précédentes, **caractérisée en ce qu'**une différence d'épaisseur de l'élément transversal (4), d'une part à la position des zones de contact mentionnées ci-dessus (14, 15, 16; 161; 162), et d'autre part à la position des autres parties mentionnées ci-dessus du côté principal (9) concerné, présente une valeur qui est comprise dans la gamme d'un minimum de cinq à dix micromètres jusqu'à un maximum d'environ cent micromètres.
